(19)

**Europäisches Patentamt**
**European Patent Office**
**Office européen des brevets**

(11) **EP 4 763 703 A1**

(12) **EUROPEAN PATENT APPLICATION**

(43) Date of publication:
24.06.2026 Bulletin 2026/26

(21) Application number: 24020352.1

(22) Date of filing: **21.12.2024**

(51) International Patent Classification (IPC):
**B64D 27/02** (2006.01)  **B64D 27/33** (2024.01)
**B64D 27/357** (2024.01)

(52) Cooperative Patent Classification (CPC):
**B64D 27/33; B64D 27/357; B64D 31/18;**
**B64D 35/025**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Green Transition Alliance B.V.**
**2629 JD Delft (NL)**

(72) Inventors:
• **NUESSELER, Martin**
**86869 Oberostendorf (DE)**
• **PISCHEDDA, Luciano**
**82061 Neuried (DE)**

(74) Representative: **Blum, Heike**
**c/o AKLaw**
**Perchtinger Straße 6**
**81379 München (DE)**

(54) **LOW ENERGY CONSUMPTION JET AIRCRAFT**

(57) The invention relates to a transport aircraft 10 with a hybrid propulsion system 30. aircraft is capable of operating at typical jets altitudes (35,000 ft) and airspeeds (> 400 KTAS) with 40-50% lower energy than turbofan powered jets.

The aircraft has a parallel hybrid propulsion system 30 with at least two or more propulsion sets 31 comprising
• a swept wing 15 with a sweep angle $\alpha$ between 5° and 25°, a high aspect ratio AIR between 10 and 20 and a wing loading between 4.000 - 7.000 N/m$^2$;
• the propulsion set 31 comprises an internal combustion engine 35 coupled to an electric generator 342 and to a propulsor 33 either directly or via a gearbox 3) and an electric motor 34 coupled to the propulsor 3); either directly or via a gearbox 37;
• the internal combustion engine 35 is a turbo-compound, a turbo-charged or super-charged combustion engine;
• fuel tank system holding conventional Jet A fuel, SAF or hydrogen feeding the internal combustion engine 35
• an electrical energy storage device 341 connected to the electric motor 34 and the generator 342, configured to provide power to the electric motor 34 and to the electric aircraft systems.

Fig. 1a

EP 4 763 703 A1

**Description**

The invention relates to a fuselage section for a transport aircraft with a hybrid electric propulsion system.

The aircraft propulsion system architecture is using an integrated hybrid engine technology. In combination with the required battery capacity and sustainable aviation fuel it shall significantly reduce emissions by operational efficiency and open the opportunity to balance mission range with zero $CO_2$ and zero emission operation.

The term aircraft refers to a motor-driven fixed-wing aircraft. However, the term aircraft also includes, for example, rotorcraft (rotor aircraft, helicopters) and powered gliders. Aircraft and their flight propulsion systems can be differentiated regarding the applicable construction and certification regulations. Regulation CS-23 issued by EASA is applicable to light fixed-wing powered aeroplanes. It applies to: 'normal, utility or aerobatic' category aeroplanes with a maximum of 9 seats (excluding pilot(s)) and a maximum take-off mass of 5,670 kg and to 'commuter' category aeroplanes with a maximum of 19 seats (excluding pilot(s)) and a maximum take-off mass of 8,618 kg. The CS-25 is also a design specification issued by EASA for the type certification of large aircraft, in particular large turbine-powered aircraft. Multi-engine aircraft to be certified according to the CS-25 are considered here.

Regional transport aircraft are predominantly characterised by a design with straight, unswept wings and a cruising speed of 500 to 700 km/h. Today, turboprop propulsion is the main application for regional transport aircraft in civil aviation.

Turboprop engines is characterised by relatively low specific fuel consumption, which is why it is primarily used in transport and short-haul aircraft. Another civilian application is in smaller business jets such as the TBM-850. In the military, turboprops are mainly used in tactical transport aircraft. Aircraft with turboprops are limited to flying speeds of up to 80 per cent of the speed of sound (0.8 Mach), which corresponds to about 870 km/h at an altitude of 8,000 m in normal conditions. In the speed range, of 0,4 to 0,75 Mach turboprops operate more economically than jet turbine engines.

To generate thrust, a large amount of air is moved by the propeller, but this is only slightly accelerated compared to turbojet engines. In pure turbojet engines, on the other hand, much smaller quantities of the propulsion medium are accelerated in higher degree.

Depending on airspeed, altitude and load, the angle of attack (pitch) of the propeller blades is changed so that both the turbine and the propeller operate in the optimum speed range.

The turbomachinery is usually optimised for the dominant flight phase, in medium and long-range missions this is usually the cruise phase, as this also accounts for the highest share of energy consumption over the mission.

Therefore, especially for regional aircraft with propeller, but also for other multi-engine aircraft with jet-engines, there are different thrust requirements over the mission, which can be designed and operated more efficiently by hybridising the thermal engines with an electric engine.

A new engine concept is being proposed to power future large transport aeroplanes as a means of reducing fuel burn and emissions. This concept is known as the 'open rotor engine' concept as published in US4171183A. A small diameter, highly loaded multiple bladed variable pitch propulsor having swept blades with thin advanced airfoil sections, integrated with a nacelle contoured to retard the airflow through the blades thereby reducing compressibility losses and designed to operate with a turbine engine and using a reduction gear resulting in a high performance, lightweight propulsion system providing a substantial improvement in efficiency over the high bypass ratio turbofan engine.

Furthermore to achieve aviation's long term emission reduction targets motivated by the European Commission with "Flight-Path 2050" [1] and specified by ACARE in the Strategic Research & Innovation Agenda [2], significant improvements along the entire efficiency chain of the air transport system are required. Added to this is the challenge of reducing $CO_2$, $NO_X$ and noise emissions. In fact, decarbonization is a major challenge for aviation. The aviation sector emits more than 900 million tons of carbon dioxide ($CO_2$) per year. Assuming industry growth of 3 to 4 percent per annum (p.a.) and efficiency improvement of 2 percent p.a., emissions would more than double by 2050. At the same time, the Air Transport Action Group (ATAG) committed to 50 percent $CO_2$ emission reduction (compared to 2005) and the European Union (EU) set with the Green Deal a target to become carbon neutral. Beyond $CO_2$, aircraft impact the climate through emissions of nitrogen oxides ($NO_x$), soot, and water vapour, which create contrails and cirrus clouds. Therefore, the "full" contribution to global warming is significantly higher than just $CO_2$ emissions alone. (Hydrogen-powered aviation, A fact-based study of hydrogen technology, economics, and climate impact by 2050, Publication date 22. June 2020. Available https://www.clean-hydrogen.europa.eu/media/publications/hydrogen-powered-aviation_en [downloaded: 04.03.2022]).

At propulsion system level, this particularly concerns enhancements of power plant thermal or inner efficiency. In Joule-Brayton cycle machines, i.e. of turbojets and gas turbine engines the thermal efficiency improvements mainly result from increased overall pressure ratio (OPR) and higher turbine entry temperatures (TET). For ideal cycle assumptions, i.e. ideal gas and perfect turbo component efficiencies equal to unity, thermal efficiency increases monotonically with higher OPR and TET. In reality, real gas properties, non-ideal components and material stress and temperature limits, which affect cooling requirements, restrict feasible efficiency improvements. Moreover, state of the art high temperature resistant materials typically increases engine bare weight, resulting in more fuel burn. Therefore, a fundamental change in aircraft engine thermodynamic cycle design is necessary.

One particularly promising option for significant efficiency enhancements beyond the Joule-Brayton cycle engines is the so-called Composite Cycle Engine (CCE) initially discussed by Kaiser et al [ "A Composite Cycle Engine Concept with Hecto-Pressure Ratio" 51st AIAA/SAE/ASEE Joint Propulsion Conference, Orlando, FL, 2015.]. This CCE concept combines the high efficiency potentials of the Seiliger cycle (isochoric-isobaric combustion), as present in piston engines, with the high specific power capability of gas turbine engines. During the forties and fifties of the last century Compound Engines (CE), like the Wright R-3350 TC (1950) ["Facts about the Wright Turbo Compound" Curtiss-Wright Corporation, Wright Aeronautical Devision, Wood-Ridge, NJ, 1956.] or the Napier Nomad E.145 (1954) [Flight Global "Napier Nomad - An Engine of Outstanding Efficiency" Flight Global 04.1954 pp 543-551. ], already used a similar approach.

These engines had piston engines and turbo components using the same working fluid and providing shaft power to one single output shaft, i.e to the propeller. The main shaft was installed in the piston engines. Although the brake specific fuel consumption was almost on the level of state-of-the-art turboprop engines the CE concept succumbed the turbo engines due to high engine weight and complexity and, even more importantly, due to limited maximum cruise speed and altitude.

Recent publications discussed again a revised concept of a Composite Cycle Engine (CCE) in Performance Modeling Of A Composite Cycle Engine With Rotary Engine, available: https://www.bauhaus-luftfahrt.net/fileadmin/ user_upload/Publikationen/2016_DLRK_Nickl_Performance_Mo delling of CCE with_RE.pdf [downloaded 08.08.2024]). To increase thermal efficiency beyond Joule-Brayton limitations in CCEs a second cycle with independent compression, combustion and power extraction (expansion) is added. In the study, a Seiliger cycle with closed volume compression and expansion and partial constant volume combustion is technically achieved with a Wankel-type rotary engine is used.

Apart from the improvements in the engine thermodynamic cycle, the question that currently arises are addressed with aircraft concepts featuring electric or hydrogen-powered propulsion systems which shall meet the aforementioned requirements. Airbus, Rolls Royce, GE and Siemens believe that they can solve the problem of reducing $CO_2$, $NO_X$ and noise emissions by replacing a turbofan engine with an electric engine, following the automotive industry on the path of electrically, or at least hybrid, powered vehicles. ("Flightpath 2050 Europe's Vision for Aviation," [Online]. Available: https://op.europa.eu/s/vUu1 [downloaded 04.03.2022]).

GE International is working on a corresponding hybridised turbofan engine for twin-engine commercial aircraft, as the disclosure of EP 3 421 760 A1 shows. An electric motor is coupled to the high-pressure shaft of one turbofan engine and to the low-pressure shaft of the other turbofan engine. An electrical energy storage is provided to feed the electric motors, so that the electric motors can provide additional drive power to the coupled turbofan in certain operating states. A similar solution is proposed by SNECMA in publication WO 2009/153471 A2.

The major impact of another proposal of using hydrogen fuel for aircrafts is the increased energy storage volume and fuel tank system weight. This leads to a significant design impact in both variants, $H_2$ combustions and Hz-fuel cells for propulsion electrification. This is why full hydrogen energy application over mission is not compatible with today's aircraft configurations.

The dual fuels propulsion architecture as it is known for example from aircraft engine manufacturer General Electric (WO 2012/045028 A1 and US 2013/0192246A1) is based on the combination of classical aircraft fuel, e.g., available Jet A-1 compatible fossil and synthetic fuels or full sustainable aviation fuels (SAF) in combination with hydrogen.

The key challenge is that zero $CO_2$ emission flight is currently not payload and volume efficient possible with hydrogen due to the impact from hydrogen storage system on volume and weight over a certain flight mission. This is valid by using hydrogen for combustion and even more by using hydrogen as energy source for fuel cells and propulsion electrification.

It is therefore the objective of the invention to provide to an optimised solution of an transport aircraft which can be operated in usual cruise altitudes with higher propulsion efficiency without compromising the payload of the aircraft. Furthermore a process to operate the aircraft in an optimized, energy efficient way is to be given.

The solution to the objective is provided by the features of the independent claims 1 and 2. The solution to the objective referring to the process is to be found in independent claim 26.

The aircraft according to the invention is a new category of aircraft capable of achieving cruise speed and altitudes typical of jet aircrafts but using significantly lower energy (>40% reduction) by combining a high aspect ratio wing with a large propulsion disc area and an advanced high efficiency thermal cycle. The propulsion architecture provides an almost constant power with altitude. By the combination of its features, it achieves a high L/D efficiency between 15 and 25.

From an operational perspective a new aircraft design according to the invention is addressing five operational objectives:

1. Payload-Range target
The payload range target illustrates the trade-off relationship between the payload and the range the aircraft. The payload refers to all the mass that is taken by an airplane, excluding fuel, e.g. passengers. The structure of an aircraft is designed to be sustain a certain number of loads. These loads depend on the amount of weight which is carried by the aircraft. Hence there is a value for the aircraft maximum take-off weight, which can never be exceeded, or the frame would collapse. Once the aircraft is loaded with the maximum amount of payload, the amount of fuel that can be embarked to fly a certain range is then limited by the maximum take-off weight. Once arrived at such point, any further range is achieved only by reducing the payload, which follows a nearly linear relationship.

2. Block Time target

A "Block Time Target" refers to the planned or scheduled block time for a flight, which airlines and airports use for operational planning. The Block Time Target has an significant impact on:

- Operational Efficiency: Helps airlines plan crew schedules, ground operations, and connecting flights.
- Passenger Satisfaction: Accurate block time targets can lead to better on-time performance, impacting customer satisfaction.
- Cost Management: Efficient block times can reduce fuel consumption and operational costs

3. Fuel consumption per pax target

The "fuel consumption per pax" target refers to the amount of fuel consumed per passenger (pax) over a certain distance. This metric is critical for airlines and transportation companies aiming to improve fuel efficiency, reduce operational costs, and minimize environmental impact.

4. Field Performance target

Aircraft field performance targets are critical parameters that determine how an aircraft performs during key phases of flight, particularly takeoff and landing. These targets are essential for ensuring the aircraft can operate safely and efficiently within the physical constraints of various airfields (airports, runways, etc.). The Take-off Distance is the minimum distance required for the aircraft to accelerate to takeoff speed, rotate, and reach a specified height (typically 35 feet) above the runway surface. Whereas the landing distance is the distance required to land and bring the aircraft to a complete stop from a specified height (typically 50 feet) above the runway threshold.

5. Operating Envelopes target

An aircraft operating envelope, also known as a flight envelope or performance envelope, defines the limits within which an aircraft can be safely operated. These limits are determined by the aircraft's design and include various factors such as speed, altitude, load factor (G-forces), and structural integrity. Understanding and staying within this envelope is crucial for the safe operation of any aircraft.

The control system comprises a controller configured to operate the propulsion system during the flight sections by selectively using the gas turbine engine and/or the electric motor. This setup allows for efficient management of the propulsion system's components, optimizing performance and fuel efficiency throughout different phases of flight. The integration of both a gas turbine engine and an electric motor provides flexibility and redundancy, enhancing the overall reliability and sustainability of the aircraft's propulsion system.

In the cruise flight section, for a given thrust, the gas turbine engine is operated at a second engine power level, which is lower than or equal to the first engine power level. Concurrently, the generator is operated at a power level sufficient to charge the electrical energy storage device. During this phase, the electric motor is operated at a second electric motor power level, which can be idle, zero, or lower than the first electric motor power level. This configuration ensures efficient power management by optimizing the usage of the gas turbine engine while maintaining the charge of the electrical energy storage device and minimizing or halting the power draw from the electric motor.

Further useful embodiments are disclosed in the dependent claims 2 to 18.

Wing design parameters and exploration

Aircraft wing design is a critical aspect of the invention, as it directly affects the performance, stability, and efficiency of an aircraft. The design process involves careful consideration of various parameters, each of which contributes to the overall aerodynamic performance and structural integrity of the wing. The wing design process typically follows the steps of

a) Airfoil initial selection,
b) Wing area requirements,
c) Planform constraints,
d) Wing planform optimisation for design point 'cruise',

e) Wing tip design and
f) Planform optimisation

Following these design steps a set of key wing design parameters and baseline are defined, the

- drag divergence Mach number,
- sweep and thickness ratio,
- aspect ratio and taper ratio,
- current wing planform and
- wing tip device initial exploration and drooplet benefits.

1. Wing Geometry and planform:

◦ Planform Shape: The overall shape of the wing when viewed from above. Common shapes include rectangular, tapered, swept, delta, and elliptical. The planform shape affects lift distribution, drag, and stall characteristics. It was found that the tapered planform shape offered the best compromise for the given mission requirements and manufacturing considerations.
◦ Aspect Ratio (AR): The ratio of the wing's span (distance from tip to tip) to its average chord (distance from leading to trailing edge). High aspect ratio wings (long and narrow) are efficient at reducing drag, particularly at high altitudes, while low aspect ratio wings (short and wide) are more manoeuvrable. An aspect ratio between 10 and 11.5 provides a good L/D efficiency while limiting the span for manoeuvring and parking restrictions / penalties on airfields.
◦ Cord and taper ratio
Wings are often linearly tapered in planform, for good engineering reasons, with different values of the root chord $c_0$ and the tip chord $c_T$. The design with linearly tapered wing shapes offers a good compromise between weight and structural efficiency, enhancing aerodynamic performance by reducing induced drag and improving fuel efficiency. Therefore, a high taper ratio is ($\lambda \leq 0.25$) avoided in order to have sufficient chord thickness at the tip for structures and integration of control surfaces.
In this case, the linear taper ratio of the wing is defined as

$$\lambda = C_T / C_0$$

For the preferred quarter chord sweep of 10° the selected taper ratio is 0.3638. This provides sufficient chord at the tip for structures and integration of control surfaces.
◦ Wing Area: The total surface area of the wing. Larger wing areas generate more lift but also more drag, impacting performance and fuel efficiency.
◦ Wing sweep / sweep angle

2. Airfoil Design:

◦ Airfoil Shape: The cross-sectional shape of the wing, which determines the lift and drag characteristics. Airfoil selection is a critical part of wing design, with shapes optimized for subsonic cruise speed. A more conservative value between 'peaky' and supercritical airfoil factors is proposed (1.05 to 1.15)
◦ Camber: The curvature of the airfoil, which affects lift and drag. Higher camber generally increases lift but can also increase drag.
◦ Thickness-to-Chord Ratio: The thickness of the wing relative to its chord length. Thicker wings can provide more internal space for fuel and structure but can increase drag. Therefore, the minimum root chord thickness ratio is 15%.

3. Wing Sweep:

◦ Sweep Angle: The angle at which the wing is swept back from the aircraft's centreline. Wing sweep is commonly used in high-speed aircraft to delay the onset of shock waves and reduce drag at transonic and supersonic speeds. However, it can also impact low-speed performance and stability. The higher sweep allows for thicker airfoils which positively impacts the weight, balancing the penalty due to sweep and aspect ratio. The initial selection of required quarter chord sweep is between 6° and 14°, preferably at 10°. This will allow a value of $M_{DD}$ equal to 101% of max cruise results in $M_{DD} = 0.727$. The initial selection of 10° quarter chord sweep also allows for increasing the thickness ratio, which helps reduce the weight impact of the high aspect ratio.

4. Wing Dihedral and Anhedral:

◦ Dihedral Angle: The upward angle of the wings relative to the horizontal plane. Dihedral improves roll stability, making the aircraft more self-righting.
◦ Anhedral Angle: The downward angle of the wings, often used in military aircraft to enhance manoeuvrability and agility.

5. Wing Loading:

◦ Wing Loading is the aircraft's weight divided by the wing area. Lower wing loading improves manoeuvrability and take-off/landing performance, while higher wing loading can improve cruise efficiency but requires higher speeds for take-off and landing. The wing loading is between 5000 - 5250 N/m$^2$.

In conclusion the main wing design parameters explored for a robust high speed wing design were selected as given in the embodiment section.

The hybrid-electric propulsion system is another key element of the invention to reduce fuel consumption, emissions, and noise of the aircraft. Sizing the engines for an optimum level of hybridization involves balancing the power split between the electric and combustion or gas turbine engines.

For all-electric applications, it is envisioned that the electric motor can be paired with a source of electricity such as a battery or a fuel cell. The electric motor could then turn the electrical energy into mechanical work to power a plane's propellers. The electrical machine could also be paired with a traditional turbofan jet engine to run as a hybrid propulsion system, providing electric propulsion during certain phases of a flight.

The following considerations for determining the optimal level of hybridization are made, which is defining the Hybridization Ratio (HR):

This is the fraction of total power provided by the electric powertrain relative to the total power required for the aircraft. It is defined as:

$$HR = P_{electric} / (P_{electric} + P_{Combust})$$

With HR = 0 represents a conventional gas turbine engine and HR = 1 represents a fully electric aircraft.

Another aspect is that hybridisation off-loads the thermal engine during Take-Off and Climb whereas a smaller engine means more optimised engine for cruise. The higher the hybridisation the lower is fuel consumption. Batteries are sized by max power requirement (Max C-Rate) and a higher hybridisation level means larger batteries. The weight of the batteries impact payload capacity at a given MTOW.

The aircraft's typical mission profile (e.g., take-off, climb, cruise, descent, landing) significantly influences the power requirements. High thrust is needed during take-off and climb, while lower thrust suffices during cruise and descent. For each mission phase, the energy demand and power requirements are assessed to determine the size of the energy storage (batteries, fuel cells) and power delivery system.

This leads to the Electric Propulsion System Components. The size of the motor is influenced by power requirements, weight, and efficiency. Typically, electric motors are more efficient than gas turbines, especially at lower power settings.

For the energy Storage batteries are sized to provide the necessary energy for the mission profile. Energy density, specific power, and weight are critical factors. The power electronics are capable of managing power distribution between electric and gas turbine engines, particularly during peak demand phases like take-off.

Another chapter is dedicated to gas turbine engine Considerations.

- Engine Scaling: The gas turbine engine needs to be sized smaller when a portion of the power is supplied by the electric motors. Smaller engines can operate more efficiently at higher power settings but may become less efficient during cruise when lower thrust is needed.

- Fuel Burn: Reducing the size of the gas turbine engine decreases fuel burn which is reducing the required mass for the fuel load. But the benefits must be weighed against the added weight of the electric range. An optimal hybridization should minimize fuel consumption over the entire mission. This is also reducing CO2 and NOx emissions which is a key driver for hybridization. The optimal HR depends on the emissions reduction targets. The additional weight of electric components (motors, batteries, etc.) must be balanced against the reduction in fuel and the smaller gas turbine engine. The cost implications of hybridization include both upfront costs and operational costs. Battery life cycle, maintenance, and fuel costs are significant factors.

In conclusion the optimal level of hybridization depends on the specific aircraft mission, technological constraints, and design objectives (fuel efficiency, emissions, etc.). A careful balance between electric and gas turbine propulsion systems is provided to achieve the desired performance and efficiency. For the envisaged 32000 Kg MTOW aircraft with a TOFL requirement of 1500m the optimum level of hybridisation is around 5% which is considered as a low hybridization.

Another key component of the aircraft is the Propeller or Propulsor. Either configured as an open rotor architecture or as a propeller with wide chord, swept blades are designed to achieve 80% and more efficiencies at high speed >0.7 MN.

The "activity factor" (AF) of the aircraft propeller is a parameter used to describe the relative size and loading of the blades. It reflects how "aggressive" the propeller is in terms of producing thrust for a given size and power and application of the aircraft, e.g. for transport aircraft. A high activity factor generally implies that the propeller is designed to deliver higher thrust and can handle more power, typically resulting in blades that are wider and have a larger surface area.

Key Features of Propellers with High Activity Factor are as follows:

1. Blade Design:

   ◦ Wider Chords: The blades of a high AF propeller have wider chords, which increase the surface area of the blades.
   ◦ Thicker Airfoil Sections: These blades often have thicker airfoil sections, improving their ability to generate lift and thrust.
   ◦ Higher Solidity: Solidity is the ratio of total blade area to the disk area swept by the propeller. Higher AF propellers have greater solidity, meaning more blade area relative to the swept area.

2. Performance Characteristics:

   ◦ Increased Thrust: Due to the larger surface area and higher loading, these propellers can generate more thrust. An optimum power loading is seen at 200 kW/m$^2$ at T/O, 150-160 kW/m$^2$ in CRZ. The downside is that these propellers may produce more drag, especially at higher speeds, which can impact overall efficiency. A reduced propeller speed at 80 % offers a high efficiency in terms of best range cruise and maximum cruise speed.

While a high activity factor can be beneficial for thrust and power absorption, it's a trade-off with propeller efficiency, especially at higher speeds. The design of the propeller is balancing the activity factor with other factors like speed, engine power, and intended mission profile of the aircraft.

In summary, a propeller with a high activity factor is tailored for high-performance applications where maximizing thrust and power absorption is more critical than achieving the absolute highest propeller efficiency at cruising speeds.

Another alternative for an efficient propulsion system offers the open rotor or unducted fan configuration. Also, the aforementioned key features for propeller with High Activity Factor apply in general for the open rotor architecture. In this configuration the propulsion system and has a rotating element depicted as a propeller assembly which includes an array of airfoil blades around a central longitudinal axis of the unducted thrust producing system. Blades are arranged in typically equally spaced relation around the engine centerline, and each blade has a root and a tip and a span defined therebetween. Non - rotating stationary elements which include an array of vanes also disposed around central axis, and each blade has a root and a tip and a span defined therebetween. These vanes may be arranged such that they are not all equidistant from the rotating assembly and may optionally include an annular shroud or duct distally from the axis or may be unshrouded. These vanes are mounted to a stationary frame and do not rotate relative to the central axis but may include a mechanism for adjusting their orientation or pitch relative to their axis and / or relative to the blades. In addition to the rotor, the design includes a nonrotating set acting as variable-pitch stator blades to help with flow recovery. It is essential that the arrangement of the rotating blades and array of vanes is essentially providing an axial jet flow which is maximizing the thrust of the propulsor set.

In summary the Turbo-compound system is comprising a combustion engine and a first turbine fed by exhaust gasses of the combustion engine and having a shaft connected with an engine crankshaft for providing the latter with mechanical energy and wherein a heat recovery system is coupled with the combustion engine for carrying out a Rankine Cycle by exploiting the heat produced by the combustion engine for producing mechanical energy.

The invention is explained in the following based on preferred embodiments with reference to the accompanying drawings, in which:

Fig. 1a    shows a front view of a twin-engine commuter aircraft featuring a parallel hybrid propulsion system driving two propellers,

Fig. 1b    shows an isometric illustration of the aircraft according to Fig. 1a,

Fig. 1c    shows a cross section of the fuselage of the aircraft according to Fig. 1a,

Fig. 2    shows a schematic drawing of the aircraft according to Fig. 1a with symbolic exhibition of the main aircraft's systems,

Fig. 3a    shows a schematic drawing of one propulsion set of the parallel hybrid propulsion system in combined propulsion mode,

Fig. 3b    shows a cross section of the schematic drawing of the propulsion set in cruise mode, charging the electrical energy storage device,

Fig. 4    shows the mission profile of the aircraft according to Fig. 1a,

Fig. 5    shows an altitude to power chart of the propulsion system in comparison to a turbofan or turboprop according to the prior art,

Fig. 6a    shows a perspective illustration of the propulsion system on the left side of the aircraft according to Fig. 1a with a transparent illustration of the propulsion set,

Fig. 6b    shows a schematic drawing of the propulsion system according to Fig. 6a,

Fig. 7a    shows projection on a variation of wing geometry and planform, of the aircraft according to Fig. 1a,

Fig. 7b    shows projection wing geometry and planform to define position of a local chord c(y),

Fig. 7c    shows projection on the specific wing geometry and planform, of the aircraft according to Fig. 1a,

Fig. 7d    shows a frontal, analytical view on the half-wing side with conventional winglets and

Fig. 7e    shows a frontal, analytical view on the half-wing side with drooplets.

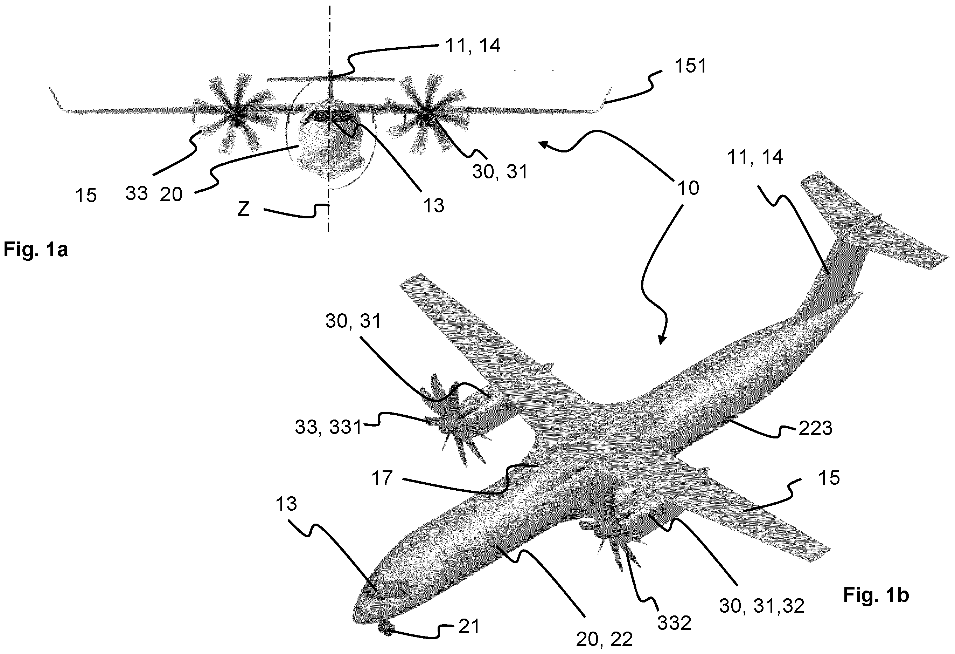

Atypical representation of a twin-engine regional aircraft 10 is shown in the embodiment according to **Fig. 1a** and **Fig. 1b.** It is a representation of next generation of a regional aircraft, the Maeve M80. The airplane 10 is designed as a conventional high-wing aircraft 10 with a T-tail empennage 11. The M80 aircraft 10 is a 'tube-and-wing' aircraft consisting of a high wing 15, T-tail empennage 11 arrangement and tricycle landing gear 21.

The aircraft 10 with a parallel hybrid propulsion system 30 features two propulsion sets 31 attached in nacelles 32 under each wing 15. Each propulsion set 31 is driving the propulsor 33 featuring a multi bladed propeller.

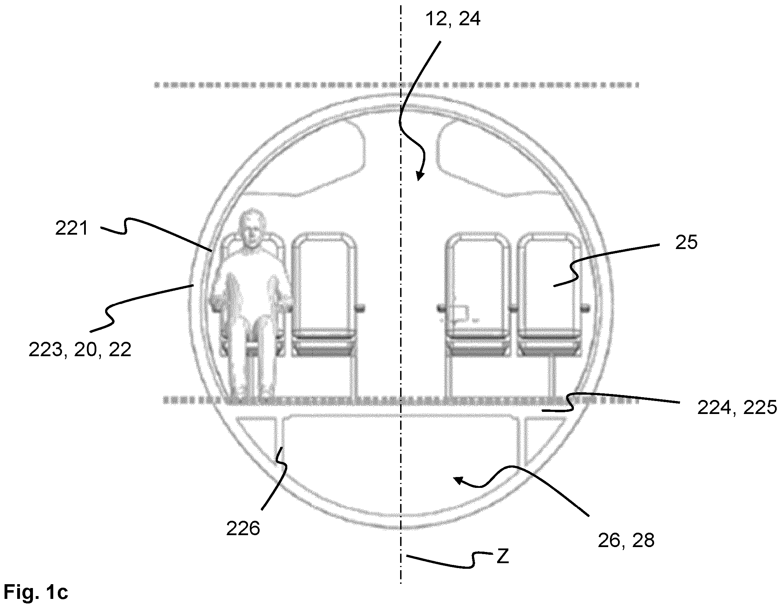

As further illustrated in **Fig. 1b** and **Fig. 1c** the fuselage 20, is an assembly of cylindrical and conical tube sections 21, featuring a pressurized cabin 12, a cockpit 13 in the front nose of the fuselage 20 and the passenger compartment hosting seat capacity for 80 passengers in a four-abreast configuration. Further aft, the fuselage 20 tapers conically and carries the T-tail 14. In the conventional shoulder deck configuration, the wings 15 are attached to the fuselage's 20 upper side, tangent to the fuselage's 20 upper side.

As illustrated in the cross section and longitudinal section of **Fig. 1b** and **Fig. 1c** respectively, the fuselage 20 comprises a pressurised shell, with a cabin floor 224 separating an upper compartment 24 from a lower compartment 26, and a cargo floor 27. Typically, the function of these components is as follows:

a) The pressurized shell and tube section 21: The fuselage 20 is typically a hollow structure of tube sections 21 with a strong outer shell that is designed to withstand the stresses of flight, including aerodynamic forces and pressurization.

b) Cabin Floor 23: The upper compartment 24 of the fuselage 20 is where the passenger cabin 12 is located. The cabin floor 224 separates this area from the lower compartment 26, which may house various systems, cargo, energy storage or other components.

c) Upper Compartment 24: This is where passengers and crew members are seated. The design of this area includes passenger seats 25 and considerations for comfort, safety, and accessibility.

d) Lower Compartment 26: Below the cabin floor 23, the lower compartment 26 may contain various systems, equipment, or additional cargo space. As for an aircraft 10 with an electric propulsion system 30 the lower compartment 26 is also hosting a plurality of battery compartments holding the electrical energy storage device 341 to feed the electric motors 34 and aircraft systems with electric energy. This area is critical for housing further components like avionics, hydraulics, or other systems necessary for the aircraft's operation.

e) Cargo Floor 27: The cargo floor 27 is a specific part of the lower compartment 26 that is designed to carry cargo and other system components. In some aircraft, this space may be used for baggage in commercial planes or for freight in cargo planes.

The fuselage's design is crucial for maintaining the structural integrity of the aircraft 10 and ensuring the safety and comfort of passengers and crew. Additionally, the fuselage 20 plays a role in the aerodynamics of the aircraft 10 and affects its overall performance.

The fuselage cross section as shown in **Fig. 1c** has a polygon 'three-lobe' design with a single radius above the cabin floor 224 line, and two distinct radii for the lower section. The wing 15 is mounted above and fully outside the fuselage 20. The interfacing between fuselage 20 and the centre wing section 16 is covered by fearings 17.

The horizontal tail 14 is adjustable for improved trim drag and field performance The main landing gear is fuselage-mounted and extends outwards and aft. The nose landing gear 21 extends downwards and aft. Landing gear retraction and extension using a localised electrical solution saving weight, consuming less power, and generating less heat and noise.

The aerostructure of the fuselage tube section 22 according to **Fig. 1c** comprises several key components, including fuselage frames 221, stringers, and fuselage skin 223. These elements work together to provide structural integrity, shape, and aerodynamic properties to the fuselage tube section 22. The fuselage frames 221 are the rigid structural elements that form the skeleton or framework of the aircraft fuselage 20. They are typically spaced at regular intervals along the length of the fuselage 20 and are therefore separated in longitudinal direction from each other. Frames 221 provide shape and support to the fuselage tube section 22, helping it maintain its structural integrity and aerodynamic form. The frames 221 define the polygon 'three-lobe' cross section of the fuselage tube section 22.

The fuselage stringers are longitudinal structural members that run parallel to the fuselage's length and are attached to the frames 221. They help distribute loads and reinforce the fuselage structure. Stringers are often positioned between the frames and provide additional support to the skin 223.

The fuselage skin 223 is the outermost layer of the fuselage 20, forming its surface. It covers and encloses the aerostructure, creating a streamlined shape for aerodynamic efficiency. The skin 223 also helps distribute aerodynamic loads and provides protection from external elements. The skin 223 is typically made of lightweight materials such as aluminium alloy, composite materials, or a combination of both.

The combination of frames 221, stringers, and skin 223 consolidates the fuselage aerostructure and creates a strong and lightweight structure that can withstand the forces encountered during flight. This design allows for an efficient and aerodynamic shape while maintaining the necessary strength and durability.

Furthermore, a cabin floor 224 is separating the upper compartment from the lower compartment and is supported by floor beams 225. Functionally the cabin floor 224 in an aircraft 10 is an essential component of the cabin 12 that provides a surface to hold the passenger seats 25 and for passengers to walk on. It serves as part of the overall structure of the fuselage tube section 22. The material used for the passenger floor is typically lightweight yet strong to meet safety and structural requirements. Common materials include advanced composite materials, aluminium alloys, or a combination of materials that balance strength and weight considerations.

The passenger floor 224 also accommodates various interior features such as carpeting, lighting, and seating attachments which are not shown. It furthermore house wiring, plumbing, and other systems necessary for in-flight services and amenities.

In summary, the passenger floor 224 is a critical part of an aircraft's cabin 12, providing a walking surface for passengers while contributing to the overall structural integrity of the aircraft. Its design must consider safety, weight, and functionality, and it plays a key role in creating a comfortable and secure environment for passengers.

Key geometrical parameters of the fuselage tube section 22 are shown in **Fig. 1c** as follows:

Z1      fuselage height
Z2      lower fuselage height; vertical position of cabin floor 224
Z6      maximum height of cargo floor 27

The initial aircraft 10 gross weight per pax is set at 345 Kg/pax in line with similar size & range turboprop aircrafts. The initial MTOW is set to 32,000 Kg.

Further key aircraft design parameter are as given in the table below:

| Weights | | |
|---|---|---|
| Max Take-Off (MTOW) | 32,000 Kg | |
| Max Landing (MLW) | 31,000 Kg | |
| Operating Empty (OEW) | 20,400 Kg | |
| Max Fuel Capacity | 5,600 Lt | |
| Max Payload | 9,200 Kg | |

(continued)

| Performance | |
|---|---|
| Operational Range | 600 NM @ 92 pax, 1200 NM @ 76 pax |
| Block Time (200 - 400 - 600 NM) | 51 - 82 - 113 mins. |
| Block Fuel (200 - 400 - 600 NM) | 758 - 1,316 - 1,803 Kg |
| Maximum Cruise Speed at FL350 | 0.725 MN (418 Kts) |
| Service Ceiling | 11,277 m |
| OEI Service Ceiling | 4,572 m |
| Take-Off Field Length (MTOW, ISA) | 1,500 m |
| Landing Field Length (MLW, ISA) | 1,300 m |

| Wing Design | | |
|---|---|---|
| Wing Area | 59.3 m$^2$ | |
| Wing Loading at MTOW | 5,300 N/m$^2$ | |
| t/c ratio (root / tip) | 15% / 12% | |
| ¼ chord sweep | 10° | |
| Aspect Ratio | 11.5 | |
| **Propulsion System** | | |
| Description | Turbo Compound Hybrid Electric Powerplant driving a transonic 9 swept-blades propeller | |
| Take-Off Engine Power (SL, ISA, 5') | 3,360 KW | |
| Take Off e-Motor Boost (NTO/MCT) | 200 KW | |
| Take-Off e-Motor Boost (OEI - 5') | 300 KW | |
| Propeller Diameter | 4.5 m | |
| **Cabin** | | |
| Max Cabin Altitude | 2,194 m | 7,200 ft at FL350 |
| Overhead Bins Volume per pax | 65 Lt/pax @ 30" pitch | |
| Cargo Volume | 13.3 m$^3$ | |

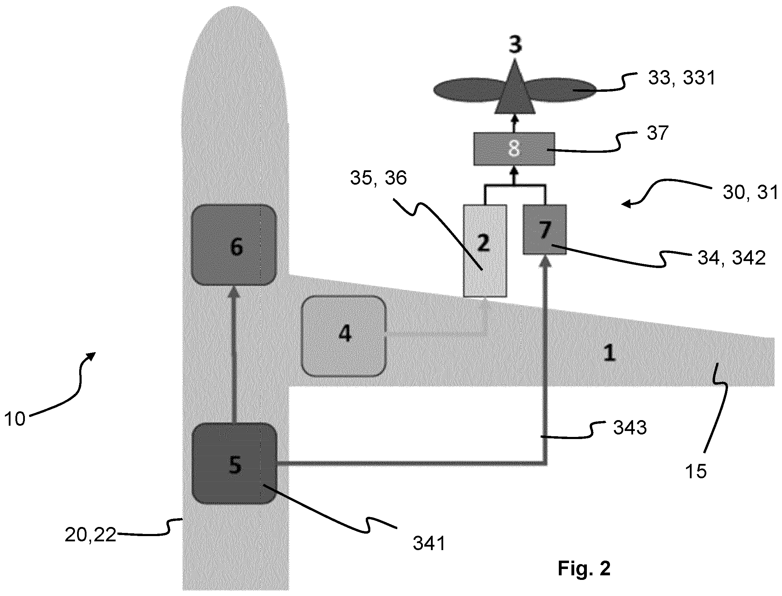

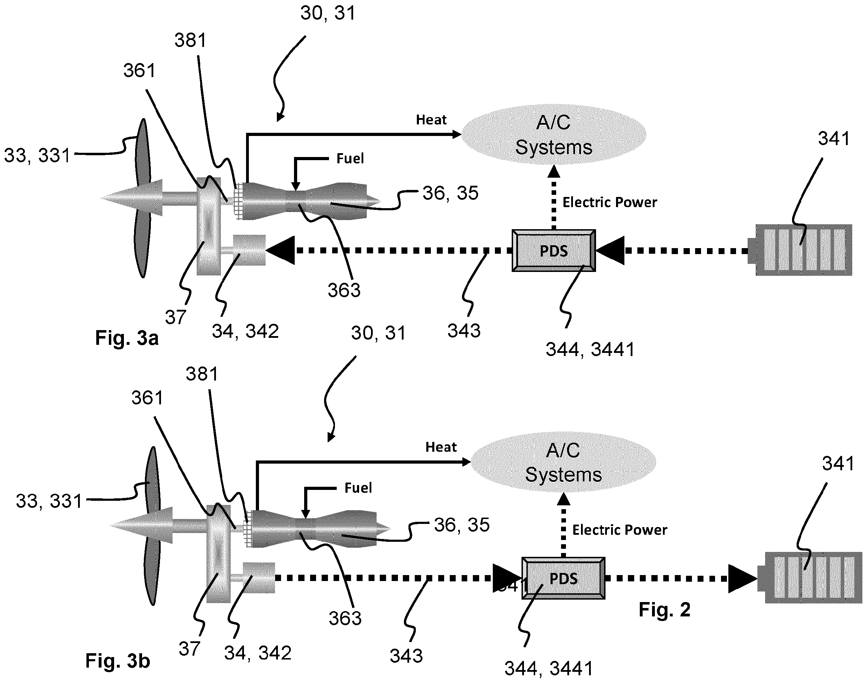

The layout of the aircraft's system architecture is further illustrated in **Fig 2, Fig. 3a** and **Fig. 3b.** As an operational objective the aircraft 10 shall be capable of flying up to 1500 NM carrying up to 100 passengers at a cruise speed between 390 and 430 Kts with a fuel consumption between 2 and 2.5 Lt/pax/100Km.

The parallel hybrid propulsion system 30 comprises two sets of propulsion units 31 one attached on each wing 15 side including the following components:

- an internal combustion engine 35 is coupled to an electric generator 342 and to a propulsor 33 via a gearbox 37,
- the electric motor 34 is coupled to the propulsor 33 via the gearbox 37
- the electrical energy storage device 341 is connected to the electric motor 28 and the generator 32 by a power distribution network 334 and
- a control system 334 selectively controls the propulsion modes adapted to the various flight sections of a given flight mission.

The gearbox 37 is a hydraulic variable speed drive coupling the internal combustion engine 35 and the electric motor 34 with the propulsor 33. The electrical motor 34 / generator 342 is used to provide extra propulsion power to the thermal engine 35 (from 100 to 1,000 KW) (during starting, taxing, take off, climb, descent and transient manoeuvres) and can be used to recharge the electrical energy storage system 341 by taking power from the thermal engine 35.

The control system 344 comprises a controller 3441 configured to operate the propulsion system 30 selectively in one of the following propulsion modii:

> i. a combined propulsion mode using the internal combustion engine 10 and the electric motor 28 to drive the propulsor 33,
> ii. a cruise mode using the internal combustion engine 10 to drive the propulsor 33 and as required, to drive the generator 342 charging the electrical energy storage device 341,
> iii. an electric propulsion mode using the electric motor 28 to drive the propulsor 33.

The control system 344 is selectively commanding the propulsion modes for a given section of flight mission and power demand.

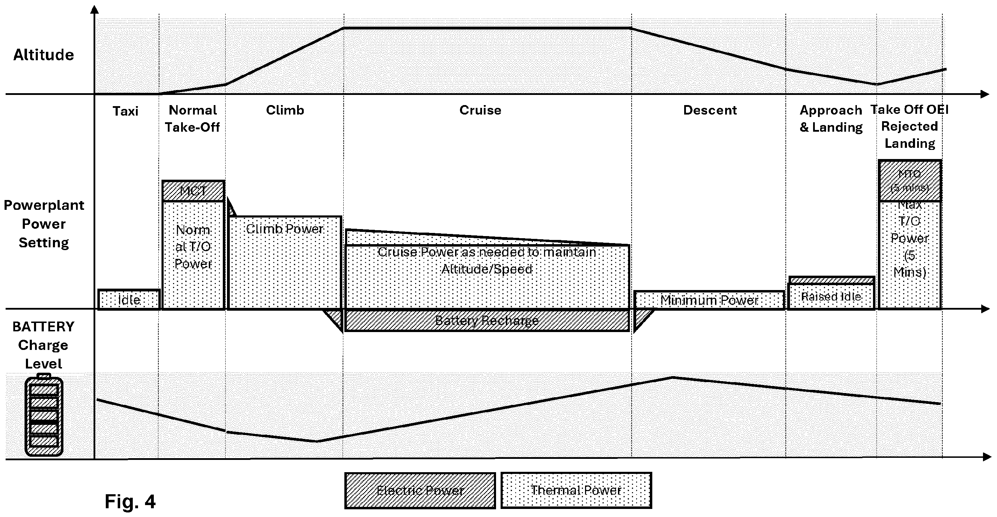

In this context the typical mission profile of the aircraft 10 is illustrated on **Fig 4.** The upper part of the charts illustrates the flight altitude during the key elements of the mission i.e. during taxi, take-off, climb, cruise, decent, approach and landing and in case of a rejected landing or missed approach take-off.

In more detail the typical mission profile of the commercial aircraft consists of a sequence of flight phases designed to transport passengers and cargo safely and efficiently from one airport to another. The breakdown of these phases are as follows:

> 1. Taxi-Out
> The aircraft 10 is pushed back from the gate and taxies to the runway following air traffic control (ATC) instructions.
>
> 2. Takeoff
> The aircraft 10 accelerates along the runway and lifts off at a predetermined speed.
>
> 3. Initial Climb
> After takeoff, the aircraft 10 climbs to its initial altitude, typically under ATC guidance.
>
> 4. Climb to Cruise Altitude
> The aircraft 10 climbs steadily, optimizing fuel consumption and performance, until reaching its assigned cruising altitude.
>
> 5. Cruise
> The aircraft 10 maintains a constant altitude and speed. This phase is the longest, with ATC monitoring and periodic position updates.
>
> 6. Descent
> The aircraft 10 begins a gradual descent toward the destination airport, reducing speed and altitude as instructed by ATC.
>
> 7. Approach
> The aircraft 10 follows a specific route to align with the landing runway. Pilots configure the aircraft 10 for landing by deploying flaps, landing gear, and adjusting speed.
>
> 8. Landing
> The aircraft 10 touches down on the runway, using brakes and reverse thrust to slow down.
>
> 9. Taxi-In
> After clearing the runway, the aircraft 10 taxies to the gate, following ATC instructions.

The control system 344 is configured to select for the given flight sections and power request from the throttle the best propulsion mode, e.g. the combined propulsion mode, cruise mode or electric propulsion mode. During flight section with high power demand, e.g. in the take-off, the hybrid propulsion system 30 is operated in the combined propulsion mode with the internal combustion engine 35 is operated at a high engine power level $MP_{turbine}$ and the electric motor 34 is operated at a high electric motor power level $MP_{electric}$ first.

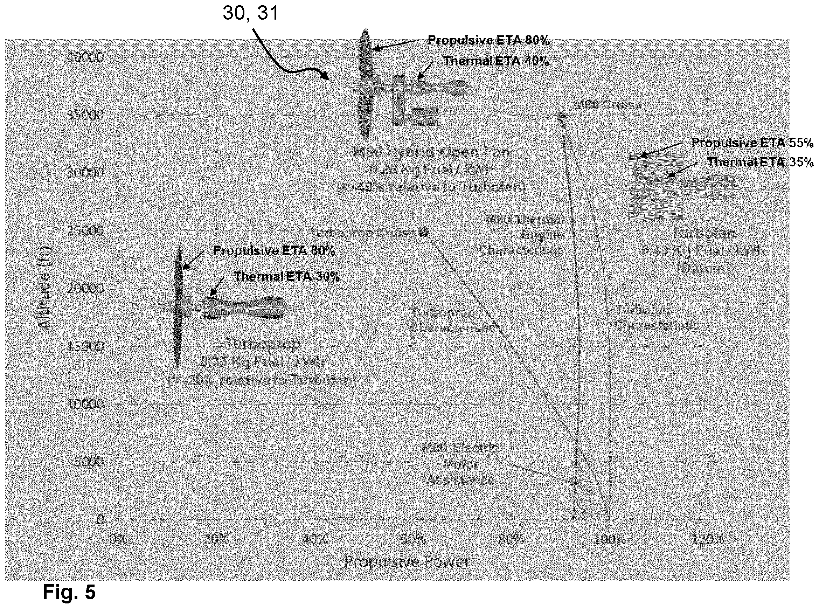

During cruise mode the hybrid propulsion system 30 is operated in cruise mode. Power from the internal combustion engine 35 is driving the propulsor 33 and the generator to charge the electrical energy storage device 341 until it is charged. In this mode the internal combustion engine 35 is operated at the point of best efficiency or close to it as illustrated in **Fig. 5.**

Following the cruise section the aircraft 10 is coming closer to its destination and set to decent mode during which the internal combustion engine 35 is operated at minimum or idle power. Excessive power is available to charge the electrical energy storage device 341. During the approach and landing phase the internal combustion engine 35 is set to a raised idle power setting as shown in **Fig. 4,** middle part. In case of a missed approach full take-off power is usually required, the hybrid propulsion system 30 is operated in the combined propulsion mode drawing power from the internal combustion engine 35 and electric motor 34.

The lower chart in **Fig. 4** exhibits the charge level of the electrical storage device 341 with its lowest level usually after the climb section and its highest level after cruise or during the descent section. Typically, the electrical storage device 341 is recharged during cruise to at least 80 % SoC.

Apart from the operational flight parameters key aircraft design parameters are compared in view of different propulsion systems (Turbofan, Turboprop, and M80 Hybrid Open Fan) across various altitudes and propulsive power levels as illustrated in **Fig. 4**. Here is a breakdown of the key points:

    1. Turbofan:

        ◦ Datum fuel consumption: 0.43 kg fuel/kWh.
        ◦ Propulsive efficiency (ETA): 90%.
        ◦ Thermal efficiency (ETA): 35%.
        ◦ The curve shows the characteristic performance of the turbofan across different propulsive power levels and altitudes.

    2. Turboprop:

        ◦ Fuel consumption: 0.35 kg fuel/kWh (approximately 20% improvement relative to Turbofan).
        ◦ Propulsive efficiency (ETA): 80%.
        ◦ Thermal efficiency (ETA): 30%.
        ◦ Performance shown at lower altitudes (up to about 20,000 ft) compared to the turbofan and M80 systems.

    3. M80 Hybrid Open Fan:

        ◦ Fuel consumption: 0.26 kg fuel/kWh (approximately 40% improvement relative to Turbofan).
        ◦ Propulsive efficiency (ETA): 80%.
        ◦ Thermal efficiency (ETA): 40%.
        ◦ Performance characteristics for cruising at higher altitudes (up to about 35,000 ft).

    4. M80 Electric Motor Assistance:

        ◦ The graph includes a trajectory showing the contribution of electric motor assistance, which improves the overall efficiency and performance at different power levels.

    5. Comparison Points:

        ◦ The image indicates specific cruising points for the turboprop and M80 hybrid systems.
        ◦ The hybrid system demonstrates a significant improvement in both propulsive and thermal efficiency, along with lower fuel consumption, when compared to the traditional turbofan and turboprop systems.

The chart effectively demonstrates the advantages of hybrid propulsion systems, particularly the M80 Hybrid Open Fan, in terms of fuel efficiency and overall performance across various flight conditions.

In order to meet the most demanding requirement according to EASA CS25 certification requirements e.g. initial climb, transition segment climb, second segment climb, enroute climb, Go-around, balk landing, the aircraft 10 is sized with:

- Wing loading between 4800 to 5500 N/m$^2$ and
- With a combustion engine 35 required to achieve take-off/climb of > 3 MW per engine at SL for the given MTOW of 32000 kg.

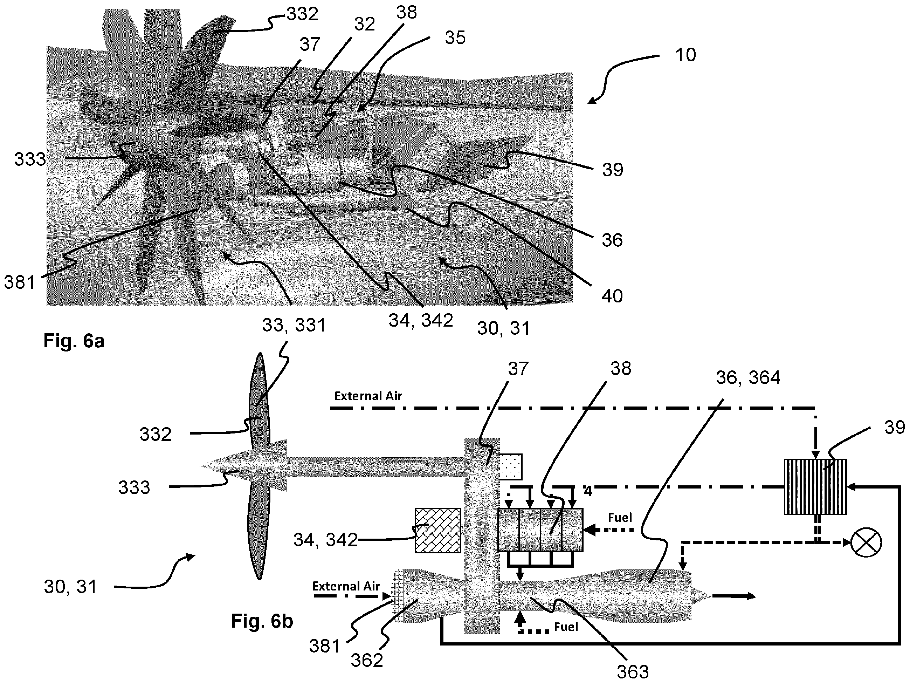

Engine-wise this is achieved with the combustion engine 35 according to the embodiment according to **Fig. 6a and 6b.** The drawings illustrate the left propulsion set 31 established as a Turbo-Compound engine, whereas the internal combustion engine 35 is designed to a compound cycle engine. It comprises a gas turbine engine 36 with a turbine power shaft 361, a compressor 362, a combustion chamber 363 and a turbine 364 driving the compressor 362.

The compound cycle increases the thermal efficiency of the gas turbine engine 36 and maintains a high power output up to cruise altitude. I.e a low fuel consumption of 0.26 kg fuel/kWh, high propulsive and thermal efficiency (ETA) of 80%, 40% respectively are attained. Thus, the aircraft 10 is able to hold output power constant (less than 20% reduction) from sea level to 35,000 ft sized and optimised for cruise altitude to achieve thermal efficiencies between 30% and 40%. The performance characteristics for cruising at higher altitudes (up to about 35,000 ft) are superior to those compared in **Fig. 5.**

The compound cycle engine further comprises a Wankel type engine 38 with an engine air intake 381, crank shaft 382 and a engine rotor driving 383 the crank shaft 382. Furthermore, the gearbox 37 couples the gas turbine engine 36 with the Wankel engine 38 to transfer power from the power shaft 361 and the crank shaft 382 to the propulsor 33 and electric generator 342. Both the gas turbine engine 36 and the Wankel engine 38 are configured to feed bleed air from the compressor 362 to the engine air intake 381 and to feed exhaust gas from the Wankel engine 38 to the combustion chamber 363 of the gas turbine engine 36.

The compound cycle engine 35 comprises furthermore an intercooler 39 configured to receive bleed air from the compressor 362, by cooling the bleed air with external air and rejecting heated external air. The heated external air is rejected via a nozzle 40 to provide additional propulsion thrust. The engine 38 shown in **Fig.6b** is realized with a Wankel-type rotary piston engine 38.

The Wankel engine 38 is a type of internal combustion engine using an eccentric rotary design to convert pressure into rotating motion. The Wankel engine's rotor 383, which creates the turning motion, is similar in shape to a Reuleaux triangle, with the sides having less curvature. The rotor 383 spins inside a figure-eight-like epitrochoid housing 384 around a fixed-toothed gearing. The midpoint of the rotor 383 moves in a circle around the output shaft 382, rotating the shaft 382 via a cam.

**Fig. 6a** also illustrates a wide chord propeller 331 with nine blades 332. The blades 332 with a high sweep angel are attached to the propeller hub 333. Two or more propellers 331 with nine wide chord swept blades and diameters between 3 and 5 m, activity factors between 80 and 160 able to achieve cruise efficiencies at 0.7 Mach of 85%.

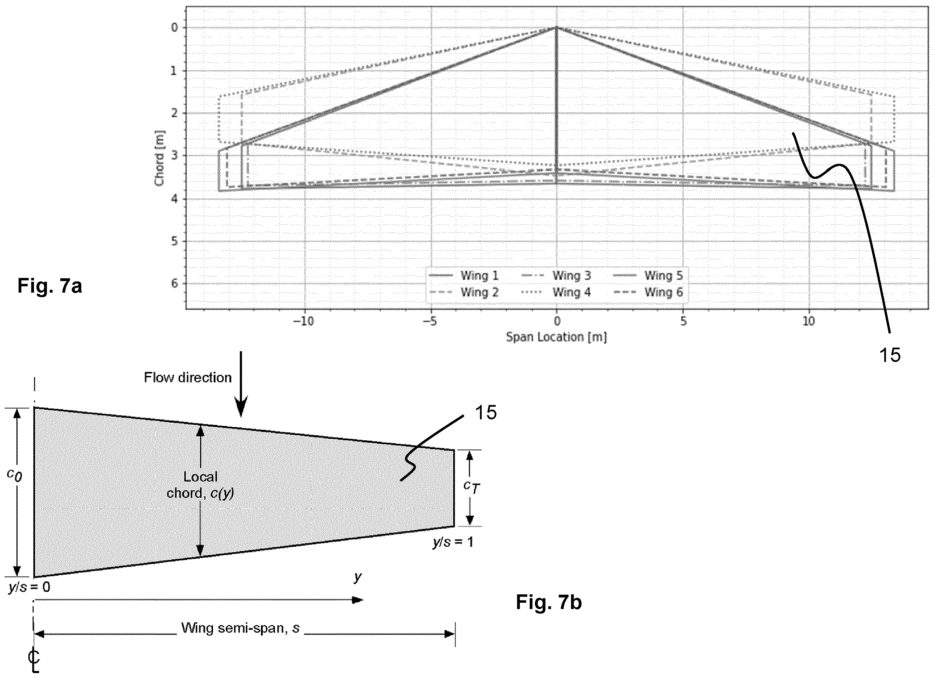

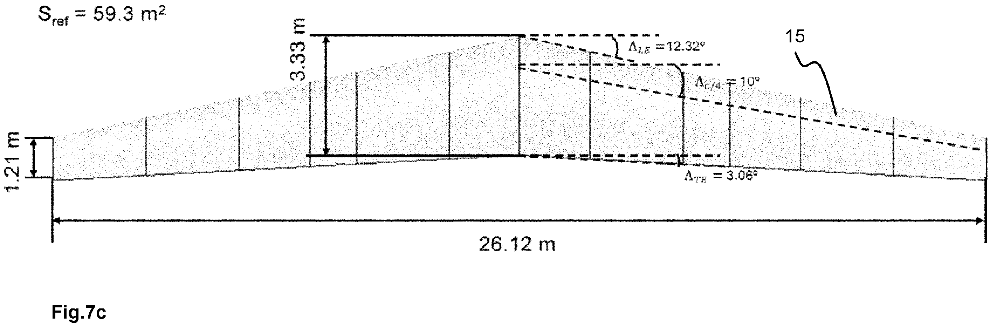

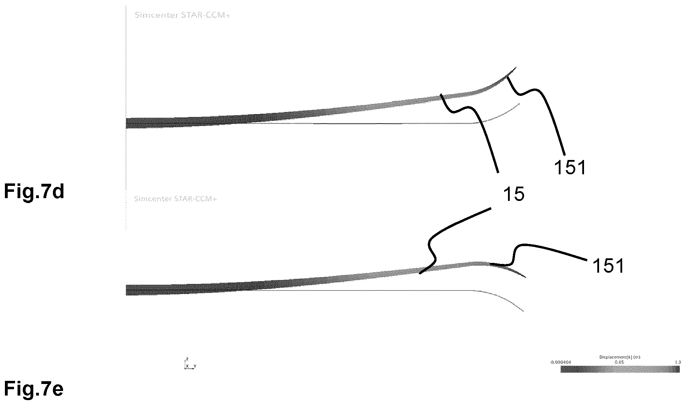

The main wing design parameters explored for a robust high speed wing design and to satisfy aforementioned EASA requirements were selected as given by the wing design according to the drawings of **Fig. 7a, 7b, 7c, 7d** and 7e **.**

**Fig. 7a and 7c** are showing a swept wing 15 design with a high leading-edge sweep i.e. between 5°and 25°. The aspect ratio is between 10 and 20 A/R. **Fig. 7b** defines the position of a local chord c(y) on a given wing semi-span position y.

The wing loading is between 4000 and 7000 N/m2 coupled with a low drag count airframe is contributing to a total L/D between 15 to 25. The wing surface area $S_{ref}$ is 59,3 m$^2$. The wing span s is 26,12 m. Other parameters are as follows:

- Quarter chord sweep (5° - 10°)
- Wing loading (5000 - 5250 N/m$^2$)
- Aspect ratio (10 - 11.5)

The taper ratio and allowable thickness ratio are outputs of these design parameters. Data for FL 350 at various Mach numbers shows that wing 15 performs better in the range of Mach 0.65 - 0.7 due to the higher wing loading and higher aspect ratio. Finally, the addition of wing tip devices can increase the L/D significantly.

Drooplet design of wing tip devices 151 as illustrated in **Fig. 7d and 7e** was identified as aerodynamically beneficial at marginal structural impact. In addition, a drooplet with a downwards bended wing tip shows in Fig. 7e a significant reduction in upward displacement (-11%) compared to a conventional winglet of Fig. 7d.

Further, as used herein, the terms "axial" or "axially" refer to a dimension along a longitudinal axis of an engine. The term "forward" used in conjunction with "axial" or "axially" refers to a direction toward the engine inlet, or a component being relatively closer to the engine inlet as compared to another component. The term "aft" or "rear" used in conjunction with "axial" or "axially" refers to a direction toward the engine nozzle, or a component being relatively closer to the engine nozzle as compared to another component. The terms "radial" or "radially" refer to a dimension extending between a center longitudinal axis (or centerline) of the engine and an outer engine circumference. Radially inward is toward the longitudinal axis and radially outward is away from the longitudinal axis.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached to," and the like refer to both direct coupling, fixing, or attaching, as well as indirect coupling, fixing, or attaching through one or more intermediate components or features, unless otherwise specified herein.

List of References

| | |
|---|---|
| 10 | Aircraft |
| 11 | Empennage |
| 12 | Cabin |
| 13 | Cockpit |
| 14 | T-tail |
| 15 | Wing |
| 151 | wing tip device |
| 16 | Center wing section |
| 17 | Fearing |
| 20 | Fuselage |
| 21 | Landing gear |
| 22, 22' | Fuselage tube section |
| 221, 221' | Fuselage frame |
| 223 | Fuselage skin |
| 224 | Cabin floor |
| 225, 225', 225" | Floor beams |
| 226, 226' | Fuselage uprights |
| 23 | |
| 24 | Passenger/ upper compartment |
| 25 | Passenger seats |
| 26 | Lower compartments |
| 27 | Cargo floor |
| 28 | Battery compartments |
| 29 | |
| 291 | Mount |
| 30 | parallel hybrid propulsion system |
| 31 | Propulsion set |
| 32 | Nacelles |
| 33 | Propulsor |
| 331 | Propeller |
| 332 | Blade |
| 333 | Propeller hub |
| 34 | Electric motor |
| 341 | electrical energy storage device |
| 342 | electric generator |
| 343 | power distribution network |
| 344 | control system |
| 3441 | controller |
| 35 | internal combustion engine |
| 36 | gas turbine engine |
| 361 | turbine power shaft |
| 362 | compressor |
| 363 | combustion chamber |
| 364 | turbine |
| 37 | gearbox |
| 38 | rotary piston engine |
| 381 | engine air intake |
| 382 | crank shaft |

383    piston engine rotor
384    housing
39     intercooler
40     nozzle
A      Deformation
dP     Diameter of propeller
X      Longitudinal axis
Z      Vertical axis

**Claims**

1.   Transport-Aircraft with a fuselage (20), a wing (15) and a parallel hybrid propulsion system (30) with at least one propulsion set (31) comprising

• a swept wing (15) with a sweep angle $\alpha$ between 5° and 25°, a high aspect ratio AIR between 10 and 20 and a wing loading between 4.000 - 7.000 N/m²;
• the propulsion set (31) comprises an internal combustion engine (35) coupled to an electric generator (342) and to a propulsor (33) either directly or via a gearbox (37) and an electric motor (34) coupled to the propulsor (33); either directly or via a gearbox (37);
• the internal combustion engine (35) is a turbo-compound, a turbo-charged or super-charged combustion engine;
• fuel tank system holding conventional Jet A fuel, SAF or hydrogen feeding the internal combustion engine (35)
• an electrical energy storage device (341) connected to the electric motor (34) and the generator (342), configured to provide power to the electric motor (34) and to the electric aircraft systems.

2.   Aircraft with a fuselage (20), a wing (15) and a parallel hybrid propulsion system (30) with at least one propulsion set (31) preferably according to claim 1, comprising;

• an internal combustion engine (35) coupled to an electric generator (342) and to a propulsor (33) via a gearbox ;
• an electric motor (28) coupled to the propulsor via a gearbox (37);
• an electrical energy storage device (341) connected to the electric motor (34) and the generator (342); wherein
• a control system (344) to selectively control propulsion modes for a flight mission comprising flight sections of at least take-off, climb, cruise, decent, approach and landing
• the control system (344) comprises a controller (3441) configured to operate the propulsion system (30) selectively

○ in a combined propulsion mode using the internal combustion engine (35) and the electric motor (34) to drive the propulsor (33) or
○ in a cruise mode using the internal combustion engine (35) to drive the propulsor (33) or
○ in an electric propulsion mode using the electric motor (34) to drive the propulsor (35)

wherein,
• during flight section with high power demand, e.g. in the take-off and climb flight sections, the hybrid propulsion system (30) is operated in the combined propulsion mode with the internal combustion engine (35) is operated at a high engine power level $MP_{thermal}$ and the electric motor (34) is operated at a high electric motor power level $MP_{electric}$, and
• during flight section with lower power demand, e.g. in the cruise flight section, the hybrid propulsion system (30) is operated in a cruise mode with the internal combustion engine (35) is operated at an engine power level which is adapted to drive the propulsor (33) and capable of charging electrical energy storage device (341) by the electric generator (342) and the electric motor (34) is operated at an electric motor power level $P_{electric}$ which is idle, zero or lower than the electric motor power level during the combined propulsion mode.

3.   Aircraft according to claim 2, **characterised in that** during cruise mode the internal combustion engine (35) is operated at a second engine power level $CP_{thermal}$ which is lower or equal than the first engine power level, the generator (342) is operated at a generator power level which is capable of charging electrical energy storage device (341), by the electric generator (342) and the first engine power level is higher than the second engine power level and first electric motor power level is higher than the second electric motor power level.

4. Aircraft according to one of the claims 2 to 3, **characterised in that** the combined maximum power $MP_{combined}$ equals or is at least the sum of the first engine power level $MP_{thermal}$ and the first electric motor power level $MP_{electric}$.

5. Aircraft according to one of the claims 2 to 4, **characterised in that** the ratio between the first engine power level $MP_{thermal}$ and the combined maximum power $MP_{thermal} / MP_{combined}$ is in the range between 0,8 and 0,95.

6. Aircraft according to one of the proceeding claims, **characterised in that** the internal combustion engine (35) is configured to provide the best efficiency $\eta_{thermal}$ at first engine power level and at cruise altitude $MP_{thermal}$

7. Aircraft according to one of the proceeding claims, **characterised in that** the compound cycle engine comprises

> • a gas turbine engine (36) with a power shaft (361), a compressor (362), a combustion chamber (363) and a turbine (364) driving the compressor (362),
> • a piston type engine or Wankel type engine (38) with an engine air intake (381), crank shaft (382) and a engine rotor (383) driving the crank shaft (382) and
> • a gearbox (37) coupling the gas turbine engine (36) with the piston type engine or Wankel type engine (38) to transfer power from the power shaft (361) and the crank shaft (382) to the propulsor (33) and / or electric generator (342),

whereas the gas turbine engine (36) and the piston type engine or Wankel type engine (38) are configured to feed bleed air from the compressor (362) to the engine air intake (381) and to feed exhaust gas from the piston type engine or Wankel type engine (38) to the combustion chamber (363).

8. Aircraft according to claim 7, **characterised in that** the compound cycle engine comprises an intercooler (39) configured to receive bleed air from the compressor (362), cooling the bleed air with external air and rejecting heated external air.

9. Aircraft according to claim 7 or 8, **characterised in that** the heated external air is rejected via a nozzle (40) to provide additional propulsion thrust.

10. Aircraft according to one of the claims 7 to 9, **characterised in that** the gearbox (37) is a hydraulic variable speed drive coupling piston type engine or Wankel type engine (38) with the gas turbine engine (36).

11. Aircraft according to one of the proceeding claims, **characterised in that** the gearbox (37) is coupled to the electric motor (34), to the internal combustion engine (35) and to a power shaft (361) to selectively transfer power from the internal combustion engine (35) and/or electric motor (34) to the power shaft(361), to which the propulsor (33) is connected.

12. Aircraft according to one of the proceeding claims, **characterised in that** the controller (3441) is configured to control the electric power generated by the generator (342), and the controller (3441) comprises a battery controller configured to control a charging rate of the energy storage device (341).

13. Aircraft according to one of the proceeding claims, **characterised in that** the energy storage device (341) comprises several batteries which are grouped in battery assemblies.

14. Aircraft according to one of the proceeding claims, **characterised in that** the generator (342) and the electric motor (34) are integrated in an electric machine.

15. Aircraft according to one of the proceeding claims, **characterised in that** the parallel hybrid propulsion system (30) comprises a thermal management system which is configured to control heat transfer between the energy storage device (341) and the internal combustion engine (35).

16. Aircraft according to claim 15, **characterised in that** thermal management system comprises an engine heat exchanger (39) to extract heat from the internal combustion engine (35) and transfer it to an energy storage heat exchanger to control the temperature of the energy storage (341).

17. Aircraft according to claim 15 or 16, **characterised in that** the thermal management system comprises a piping system with heat pumps to exchange the heat between the engine heat exchanger and energy storage heat exchanger.

18. Aircraft according to one of the claims 15 to 17, **characterised in that** the thermal management system is connected with the controller (3411) to control the temperature of the energy storage heat exchanger depending on the temperature of the energy storage device (341) and the flight section.

19. Aircraft according to one of the proceeding claims, **characterised in that** the propulsor (33) is a multi-blade deep cord propeller (331) or open rotor for high altitude, preferably with 8 or more blades (332) and preferably with a diameter $d_P$ between 3m and 5m.

20. Aircraft according to one of the claims 1 to 19, **characterised in that** the propulsor set (31) comprises an open rotor with an array of airfoil blades driven by the internal combustion engine (35) and / or electric motor (34) and downstream of the array of airfoil blades a stator with an array of nonrotating vanes.

21. Aircraft with a parallel hybrid propulsion system according to one of the proceeding claims, **characterised in that** the parallel hybrid propulsion system (30) comprises two propulsion sets (31) each hosted in an engine nacelle (32) attached to the left and right wing (15) respectively.

22. Aircraft according to one of the claims 1 to 20, **characterised in that** the **in that** the parallel hybrid propulsion system (30) comprises two propulsion sets (31) each hosted in an engine nacelle (32) which are attached on a tail section (14) of the fuselage (20), preferably downstream of the pressure bulkhead of the fuselage (20).

23. Aircraft according to one of the proceeding claims, **characterised in that** the fuselage comprises a cabin section (22) to host passengers and / or cargo and / or batteries, wherein the cabin section (22) has a circular, elliptical or polygon cross section.

24. Aircraft according to claim 23, **characterised in that** the cabin section (22) is divided by a cabin floor (224) which is separating an upper compartment (24) from a lower compartment (26).

25. Aircraft according to claim 24, **characterised in that** at least 60% of the cabin section height is allocated to the upper compartment (24).

26. Process to operate an aircraft according to one of the proceeding claims, **characterized in that**

• during the take-off and climb flight section, the propulsion power is provided by the internal combustion engine (35) and the electric motor (34),
• during the cruise flight section, the propulsion power is predominantly or completely provided by the internal combustion engine (35),
• during the decent flight section, the propulsion power is provided by the internal combustion engine (35) and the electric generator (341) is operated at a generator power level which is capable of charging electrical energy storage device (341).

27. Process according to claim 26, **characterized in that** the electrical energy storage device (341) is recharged before entering flight sections of approach and landing, preferably recharged during flight sections of cruise and / or decent.

Fig. 1a

Fig. 1b

25

224, 225

26, 28

Z

12, 24

221

223, 20, 22

226

Fig. 1c

Fig. 2

Fig. 3a

Fig. 3b

Fig. 2

Fig. 4

Fig. 5

Fig. 6a

Fig. 6b

Fig. 7a

Fig. 7b

$S_{ref} = 59.3 \ m^2$

3.33 m

1.21 m

$\Lambda_{LE} = 12.32°$

$\Lambda_{c/4} = 10°$

$\Lambda_{TE} = 3.06°$

15

26.12 m

**Fig.7c**

Fig.7d

Fig.7e

| | Europäisches Patentamt European Patent Office Office européen des brevets | **EUROPEAN SEARCH REPORT** | Application Number EP 24 02 0352 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/347490 A1 (LANDERS THOMAS [US] ET AL) 11 November 2021 (2021-11-11) | 1-6,11, 13,14, 19-27 | INV. B64D27/02 B64D27/33 |
| Y | * paragraph [0020] - paragraph [0046]; claims 1-13; figures 1-6 * | 7-10,12, 15-18 | B64D27/357 |
| X | EP 3 421 760 A1 (GEN ELECTRIC [US]) 2 January 2019 (2019-01-02) * paragraph [0042] - paragraph [0074]; claim 15; figure 1 * | 1 | |
| Y | US 2023/415905 A1 (FREER RICHARD [CA]) 28 December 2023 (2023-12-28) * paragraph [0033] - paragraph [0051]; figure 2 * | 7-10 | |
| Y | US 2022/243670 A1 (PARK SEONG IK [KR]) 4 August 2022 (2022-08-04) * paragraph [00458] - paragraph [0052]; claim 2; figure 5 * | 12 | |
| Y | US 2020/130534 A1 (JULIEN ANDRE [CA] ET AL) 30 April 2020 (2020-04-30) * paragraph [0021] - paragraph [0025]; claim 1; figure 1 * | 15-18 | TECHNICAL FIELDS SEARCHED (IPC) B64D |
| A | US 2019/002115 A1 (MILLER BRANDON WAYNE [US] ET AL) 3 January 2019 (2019-01-03) * paragraph [0076] - paragraph [0086]; claims 1, 7 * * paragraph [0110] - paragraph [0122] * | 1-27 | |

The present search report has been drawn up for all claims

| Place of search | Date of completion of the search | Examiner |
|---|---|---|
| Munich | 22 May 2025 | Kirchmayr, Sara |

EPO FORM 1503 03.82 (P4C01)

## ANNEX TO THE EUROPEAN SEARCH REPORT
## ON EUROPEAN PATENT APPLICATION NO.

EP 24 02 0352

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | | | Publication date | Patent family member(s) | | Publication date |
|---|---|---|---|---|---|---|
| US 2021347490 | A1 | | 11-11-2021 | CN | 113619795 A | 09-11-2021 |
| | | | | EP | 3907136 A1 | 10-11-2021 |
| | | | | US | 2021347490 A1 | 11-11-2021 |
| EP 3421760 | A1 | | 02-01-2019 | CA | 3008369 A1 | 26-12-2018 |
| | | | | CN | 109110137 A | 01-01-2019 |
| | | | | CN | 117048836 A | 14-11-2023 |
| | | | | EP | 3421760 A1 | 02-01-2019 |
| | | | | EP | 4368824 A1 | 15-05-2024 |
| | | | | JP | 7330670 B2 | 22-08-2023 |
| | | | | JP | 7581446 B2 | 12-11-2024 |
| | | | | JP | 2019027431 A | 21-02-2019 |
| | | | | JP | 2023157934 A | 26-10-2023 |
| | | | | US | 2018370646 A1 | 27-12-2018 |
| US 2023415905 | A1 | | 28-12-2023 | CA | 3204271 A1 | 21-12-2023 |
| | | | | EP | 4296167 A1 | 27-12-2023 |
| | | | | US | 11827370 B1 | 28-11-2023 |
| | | | | US | 2023415905 A1 | 28-12-2023 |
| US 2022243670 | A1 | | 04-08-2022 | CN | 114834642 A | 02-08-2022 |
| | | | | EP | 4035928 A1 | 03-08-2022 |
| | | | | JP | 2022118694 A | 15-08-2022 |
| | | | | KR | 20220111784 A | 10-08-2022 |
| | | | | US | 2022243670 A1 | 04-08-2022 |
| | | | | US | 2024183316 A1 | 06-06-2024 |
| US 2020130534 | A1 | | 30-04-2020 | CA | 3058174 A1 | 26-04-2020 |
| | | | | CN | 111106414 A | 05-05-2020 |
| | | | | EP | 3643889 A1 | 29-04-2020 |
| | | | | US | 2020130534 A1 | 30-04-2020 |
| US 2019002115 | A1 | | 03-01-2019 | CA | 3003823 A1 | 17-11-2018 |
| | | | | CN | 108945479 A | 07-12-2018 |
| | | | | EP | 3403933 A1 | 21-11-2018 |
| | | | | JP | 6703036 B2 | 03-06-2020 |
| | | | | JP | 2019039420 A | 14-03-2019 |
| | | | | US | 2019002115 A1 | 03-01-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4171183 A
- EP 3421760 A1
- WO 2009153471 A2
- WO 2012045028 A1
- US 20130192246 A1

**Non-patent literature cited in the description**

- *Hydrogen-powered aviation, A fact-based study of hydrogen technology, economics, and climate impact by 2050*, 22 June 2020, https://www.clean-hydrogen. europa.eu/media/publications/hydrogen-powered-aviation_en
- **KAISER et al.** A Composite Cycle Engine Concept with Hecto-Pressure Ratio. *51st AIAA/SAE/ASEE Joint Propulsion Conference, Orlando, FL*, 2015
- Facts about the Wright Turbo Compound. Curtiss-Wright Corporation, 1956
- Napier Nomad - An Engine of Outstanding Efficiency. Napier Nomad E.145. 1954, 543-551
- *Performance Modeling Of A Composite Cycle Engine With Rotary Engine*, 08 August 2024, https://www. bauhaus-luftfahrt.net/fileadmin/user_upload/Publikationen/2016_DLRK_Nickl_Performance_Mo delling of CCE with_RE.pdf
- *Flightpath 2050 Europe's Vision for Aviation*, 04 March 2022